# EUROPEAN PATENT SPECIFICATION

(11) **EP 2 873 520 B1**
(45) Date of publication and mention of the grant of the patent: **02.08.2017**
(21) Application number: 13004938.0
(22) Date of filing: 15.10.2013
(51) Int. Cl.: B32B 5/14, B32B 15/04, B42D 15/00, B32B 27/12, B32B 27/16

(54) **SECURITY FEATURE BASED ON A POLYMER LAYER COMPRISING A FIRST AREA AND A FURTHER AREA**
SICHERHEITSMERKMAL AUF BASIS EINES POLYMERS MIT EINEM ERSTEN BEREICH UND EINEM WEITEREN BEREICH
CARACTÉRISTIQUE DE SÉCURITÉ BASÉE SUR UNE COUCHE POLYMÈRE COMPRENANT UNE PREMIÈRE ZONE ET UNE ZONE SUPPLÉMENTAIRE

(43) Date of publication of application: 20.05.2015
(73) Proprietor: Heraeus Deutschland GmbH & Co. KG, 63450 Hanau (DE)
(72) Inventor: Sautter, Armin, 40597 Düsseldorf (DE); Puttkammer, Frank, 01640 Coswig (DE)
(74) Representative: Herzog, Fiesser & Partner Patentanwälte PartG mbB

(56) References cited:
- EP-A1- 1 835 513
- EP-A2- 1 246 011
- JP-A- 2003 055 478
- JP-A- 2003 145 971
- US-A1- 2007 193 978
- US-A1- 2012 080 218

## Description

The invention relates to a composite comprising a security feature based on a polymer layer comprising a first area and a further area; and a process for making a composite comprising a security feature based on a polymer layer comprising a first area and a further area.

Product piracy and counterfeiting call for security features having an increasing degree of sophistication. The latest technical developments have to be utilised to generate security features which keep the hurdles for counterfeiting high. Examples of objects to be protected against unauthorised reproduction by the use of security features are brand products, safety relevant products like spare parts, any kind of official documents like identification documents, certificates and banknotes. Generally, there are three different classes of security features known in the prior art. The features of a first class are detectable without any additional device. Such features are mostly optical features like holograms (WO 2006/074558 A1) or watermarks; or haptic features like braille. These features are typically visible to the bare eye. The features of a second class are detectable by a simple device. Typically, the features of the second class are optical features which are not visible to the bare eye. EP 1 719 637 A2 discloses a security feature comprising a UV-fluorescent ink. Said feature can be visualised by a UV-lamp as the simple device. The security features of a third class are detectable by a complex device or procedure only. These features are invisible to the bare eye. Examples of visualising techniques are chemical analysis and detection of magnetic properties. WO 2009/090676 A1 discloses a security feature which is based on magnetic properties of a carrier. The feature can only be read using a dedicated sensor. A technique for preventing forgery, alteration and falsification of a variety of cards is provided by JP 2003-055478 A. Further, JP 2003-145971 A teaches a recording medium which can be specifically visualised by the adhesion of a liquid.

Security features known in the prior art show the following disadvantages. Security features of the prior art belonging to the first class are visible to the bare eye. A security features which can easily be recognised as such by counterfeiters has already lost a hurdle against unauthorised reproduction. Moreover, security features which are visible to the bare eye affect the appearance of the marked object. Security features of the prior art belonging to the second or third group can only be visualised or read by an additional device or by a complex procedure or both. Visualising or reading security features of the prior art needs to spend too much time on it. Visualising or reading of security features of the prior art can only be realised by people having the appropriate device available. Moreover, visualising or reading security features of the prior art can only be done in situations in which the appropriate device is available. It is another disadvantage of the security features of the third class known in the prior art that the visualising or reading procedure is complex and thus prone to errors.

Generally it is an object of the present invention to at least partly overcome a disadvantage arising form the prior art. It is an object of the invention to provide a security feature which is invisible to the bare eye. It is another object of the invention to provide a security feature which is invisible to the bare eye until the feature is read out. It is yet another object of the invention to provide a security feature which can be visualised or read out without any additional device. It is a further object of the invention to provide a security feature which can be visualised or read by a procedure which takes as few time as possible. It is a further object of the invention to provide a security feature which can be visualised or read by a simple procedure. It is yet another object of the invention to provide a security feature which can be visualised through moisture such as by exhaling onto the feature. It is another object of the invention to provide a security feature which can be visualised by as many people as possible. It is another object of the invention to provide a security feature which can be visualised in as many situations of life as possible. It is another object of the invention to provide a security feature which can be applied to an object in addition to other security features. It is another object of the invention to provide a security feature which can be applied to obtain a combined security feature which comprises a contribution of the feature according to the invention and a contribution of a feature known in the prior art. It is another object of the invention to provide a security feature which can be produced cost effectively. It is another object of the invention to provide a security feature which can be applied to an object by a simple procedure. It is another object of the invention to provide a security feature which can be applied to an object by a quick procedure. It is another object of the invention to provide a security feature which can be produced from few materials. It is another object of the invention to provide a security feature which can be produced from cost effective materials. It is another object of the invention to provide a security feature which can easily be applied to a wide range of different objects. It is another object of the invention to provide a security feature which can easily be applied to banknotes. It is another object of the invention to provide a security feature which does not affect an appearance or design or both of an object marked by the feature. It is another object of the invention to provide a security feature which is destroyed by an inappropriate use of the object which is marked by the feature. It is another object of the invention to provide a security feature which can be combined with a functionality of the object marked by the feature. It is another object of the invention to provide a security feature which can be equipped with an antistatic effect. It is another object of the invention to provide a security feature which does not deteriorate a machine readability of an object marked by the feature. It is another object of the invention to provide a security feature which provides a high hurdle for unauthorised reproduction of the feature or counterfeiting of an object marked by the feature or both. It is another object of the invention to provide a security feature which is long term stable. It is another object of the invention to provide a security feature which can be applied to banknotes; brand products; official documents like identification documents, passports and certificates; smart cards and integrated circuit cards.

A contribution to at least one of the above objects is given by the independent claims. The dependent claims provide preferred embodiments of the present invention which also serve the solution of at least one of the above mentioned objects. A contribution to the solution of at least one of the above objects is made by a use of a polymer layer comprising a first area and a further area as a security feature that can be visualised through moisture, wherein the polymer layer is comprised in a composite comprising:
a) a substrate, comprising a substrate surface;
b) the polymer layer, comprising a polymer surface,
wherein the polymer layer
i) comprises a polymer,
ii) at least partly superimposes the substrate surface of the layer;
wherein the polymer layer surface comprises the first area and the further area;
wherein an absolute value of a difference between a wetting angle for wetting with water of the first area and a wetting angle for wetting with water of the further area is at least about 10°, preferably at least about 15°, more preferably at least about 20°, even more preferably at least about 25°, most preferably at least about 30°, wherein the polymer is an electrically conductive polymer.

It is further disclosed a composite comprising:
a) a substrate, comprising a substrate surface;
b) a polymer layer, comprising a polymer layer surface,
wherein the polymer layer
i) comprises a polymer,
ii) at least partly superimposes the substrate surface of the layer;
wherein the polymer layer surface comprises a first area and a further area;
wherein an absolute value of a difference between a wetting angle for wetting with water of the first area and a wetting angle for wetting with water of the further area is at least about 10°, preferably at least about 15°, more preferably at least about 20°, even more preferably at least about 25°, most preferably at least about 30°. A preferred polymer is an electrically conductive polymer.

In an embodiment of the invention a composite is characterised in that the conductive polymer is PEDOT:PSS.

In an embodiment of the invention a composite is characterised in that the polymer layer comprises the polymer in an amount in the range from about 5 to about 97 wt.-%, preferably in the range from about 7 to about 95 wt.-%, more preferably in the range from about 10 to about 90 wt.-%, more preferably in the range from about 15 to about 85 wt.-%, even more preferably in the range from about 20 to about 80 wt.-%, even more preferably in the range from about 30 to about 70 wt.-%, most preferably in the range from about 40 to about 60 wt.-%, based on the total weight of the polymer layer.

In an embodiment of the invention a composite is characterised in that the polymer layer further comprises a further polymer. A preferred further polymer is an additive or a crosslinker or both. A preferred additive is an organic additive or a water-soluble additive or both. A preferred organic additive is one selected from the group consisting of polyvinylacetat, polycarbonate, polyvinylbutyrat, polyacrylacidester, polymethacrylacidester, polystyrol, polyacrylonitril, polyvinylchloride, polybutadien, polyisopren, polyether, polysulfonic acid, polystyrenesulfonic acid, sulfopolyester, polyurethane, melamine-formaldehyde resin, polyester, silicon, styrol/acrylacidester-, vinylacetat/acrylacidster-, and ethylen/vinylacetatcopolymerisate, silicones, or combination of at least two thereof. A particularly preferred organic additive is A sulfopolyester. A preferred water-soluble additive is a polyvinylalcohol. A preferred crosslinkers is one selected from the group consisting of a polyacrylate, a polyolefindispersion and an epoxysilane or a combination of at least two thereof. A preferred epoxysilane is 3-glycidoxypropyltrialkoxysiloan.

In an embodiment of the invention a composite is characterised in that the polymer layer comprises the further polymer in an amount of at least about 10 wt.-%, preferably in an amount of at least about 20 wt.-%, most preferably in an amount of at least about 25 wt.-%, based on the total weight of the polymer layer,
wherein a transmission coefficient of the first area being wetted with water is at least about 10 %, preferably at least about 20 %, most preferably at least about 45 %, higher than a transmission coefficient of the first area being dry. For the use throughout this document the transmission coefficient is defined as a ratio of a flux density of light incident on a layer to a flux density of the light after transmission through the layer. Preferred light is visible light. Preferred visible light is light having a wavelength in the range from about 400 to about 700 nm.

In an embodiment of the invention a composite is characterised in that the polymer layer comprises the further polymer in an amount of less than about 20 wt.-%, preferably less than about 10 wt.-%, most preferably less than about 5 wt.-%, based on the total weight of the polymer layer. A preferred polymer layer experiences a deterioration of the absolute value of the difference between the wetting angle for wetting with water of the first area and the wetting angle for wetting with water of the further area by an inappropriate handling of an object comprising the substrate. A preferred inappropriate handling is one selected from the group consisting of opening of a classified matter, shaking, transporting, exposing to an atmosphere or a combination of at least two thereof. Another preferred polymer layer experiences a deterioration of the absolute value of the difference between the wetting angle for wetting with water of the first area and the wetting angle for wetting with water of the further area by a chemical or by a physical process or by both. A preferred chemical process is induced by exposing the polymer layer to a gaseous atmosphere or to a fluid atmosphere or both. A preferred physical process is one selected from the group consisting of exerting friction, exerting abrasion, applying a force and applying a thermal treatment or a combination of at least two thereof. Another preferred polymer layer is damaged or destroyed or both by one selected from the group consisting of an inappropriate handling of an object comprising the substrate, a chemical process, a physical process or a combination of at least two thereof.

In an embodiment of the invention a composite is characterised in that the first area is characterised by a wetting angle for wetting with water in the range from about 10 to about 150°, preferably from about 15 to about 145°, more preferably from about 20 to about 140°, even more preferably from about 30 to about 130°, even more preferably from about 40 to about 120°, even more preferably from about 60 to about 100°, most preferably from about 75 to about 95°, and the further area is characterised by a wetting angle for wetting with water in the range from about 1 to about 140°, preferably from about 5 to about 135°, more preferably from about 10 to about 130°, even more preferably from about 15 to about 125°, even more preferably from about 20 to about 120°, even more preferably from about 30 to about 110°, most preferably from about 50 to about 90°.

In an embodiment of the invention a composite is characterised in that the composite further comprises an optical feature,
wherein the polymer layer superimposes the optical feature,
wherein the polymer layer is optically transparent for the optical feature. An optical feature is a feature which can be read by an optical instrument. A preferred optical instrument is a human eye.

In an embodiment of the invention a composite is characterised in that the first area at least partly superimposes the optical feature,
wherein a contrast range of the optical feature is at least about 10 %, preferably at least about 15 %, most preferably at least about 20 %, higher for the first area being wetted with water with respect to the first area being dry.

In an embodiment of the invention a composite is characterised in that the optical feature is one selected from the group consisting of an optically variable device, a high refractive index layer, a colour, a graphical element, a watermark, a reflective coating, an inlay or a combination of at least two thereof. Optically variable devices (OVD) are known in the prior art and used as security features. A high refractive index layer is an optically transparent layer comprising a high refractive index material. A preferred high refractive index material is an oxide, preferably titanium dioxide, or a sulphide, preferably zinc sulphide, or both.

In an embodiment of the invention a composite is characterised in that the optically variable device comprises a diffractive structure and optionally a metal layer. For the use throughout this document a diffractive structure is an object comprising a periodic structure at which light is diffracted. A preferred diffractive structure is a diffraction grating. A preferred diffraction grating is a reflective grating. A preferred optically variable device comprises a diffractive structure and a metal layer.

In an embodiment of the invention a composite is characterised in that the composite comprises:
a) the substrate;
b) a metal layer, comprising a metal layer surface;
   wherein the metal layer
   i) comprises a metal,
   ii) at least partly superimposes the substrate surface;
c) a diffractive layer, comprising a diffractive layer surface;
   wherein the diffractive layer
   i) comprises a diffractive structure,
   ii) at least partly superimposes the metal layer surface;
d) the polymer layer,
wherein the polymer layer at least partly superimposes the diffractive layer surface.

It is further disclosed a composite comprising:
a) a substrate, comprising a substrate surface;
b) a metal layer, comprising a metal layer surface;
   wherein the metal layer
   i) comprises a metal,
   ii) at least partly superimposes the substrate surface;
c) a diffractive layer, comprising a diffractive layer surface;
   wherein the diffractive layer
   i) comprises a diffractive structure,
   ii) at least partly superimposes the metal layer surface;
d) a polymer layer, comprising a polymer layer surface,
   wherein the polymer layer
   i) comprises a polymer,
   ii) at least partly superimposes the diffractive layer surface; wherein the polymer layer surface comprises a first area and a further area;
wherein an absolute value of a difference between a wetting angle for wetting with water of the first area and a wetting angle for wetting with water of the further area is at least about 10°, preferably at least about 15°, more preferably at least about 20°, even more preferably at least about 25°, most preferably at least about 30°. A preferred polymer is an electrically conductive polymer. A preferred electrically conductive polymer is PEDOT:PSS.

In an embodiment of the invention a composite is characterised in that the composite comprises:
a) the substrate;
b) a high refractive index layer, comprising a high refractive index layer surface;
   wherein the high refractive index layer at least partly superimposes the substrate surface;
c) a diffractive layer, comprising a diffractive layer surface;
   wherein the diffractive layer
   i) comprises a diffractive structure,
   ii) at least partly superimposes the high refractive index layer surface;
d) the polymer layer,
wherein the polymer layer at least partly superimposes the diffractive layer surface.

It is further disclosed a composite comprising:
a) a substrate, comprising a substrate surface;
b) a high refractive index layer, comprising a high refractive index layer surface;
   wherein the high refractive index layer at least partly superimposes the substrate surface;
c) a diffractive layer, comprising a diffractive layer surface;
   wherein the diffractive layer
   i) comprises a diffractive structure,
   ii) at least partly superimposes the high refractive index layer surface;
d) a polymer layer, comprising a polymer layer surface,
   wherein the polymer layer
   i) comprises a polymer,
   ii) at least partly superimposes the diffractive layer surface;
wherein the polymer layer surface comprises a first area and a further area;
wherein an absolute value of a difference between a wetting angle for wetting with water of the first area and a wetting angle for wetting with water of the further area is at least about 10°, preferably at least about 15°, more preferably at least about 20°, even more preferably at least about 25°, most preferably at least about 30°. A preferred polymer is an electrically conductive polymer. A preferred electrically conductive polymer is PEDOT:PSS.

In an embodiment of the invention a composite is characterised in that the composite further comprises a metal layer, comprising a metal layer surface;
wherein the metal layer
a) comprises a metal,
b) partly superimposes the high refractive index layer surface;
wherein the metal layer surface is at least partly superimposed by the diffractive layer.

In an embodiment of the invention a composite is characterised in that the composite further comprises a haptic feature,
wherein the polymer layer superimposes the haptic feature,
wherein the polymer layer is haptically transparent for the haptic feature. For the use throughout this document a haptic feature is a feature which can be read by a haptic sensor. A preferred haptic sensor is a human skin. A layer is haptically transparent for a haptic feature if a haptic instrument can read the haptic feature which is superimposed by the layer. Preferably, the polymer layer superimposes the haptic feature in such a way that the first area of the polymer layer at least partly superimposes the haptic feature.

In an embodiment of the invention a composite is characterised in that the haptic feature is one selected from the group consisting of an embossed printing, a bold relief, a sunken relief, a braille, a texture, a perforation or a combination of at least two thereof.

In an embodiment of the invention a composite is characterised in that the substrate is comprised by an object of value. A preferred object of value is one selected from the group consisting of a retail product, a spare part and a document or a combination of at least two thereof. A preferred retail product is a sheet or a non-sheet-like three-dimensional structure such as a mold or both. A preferred non-sheet-like three-dimensional structure is one selected from the group consisting of a car, a truck, an electronic device and jewellery or a combination of at least two thereof.

In an embodiment of the invention a composite is characterised in that the object of value is a sheet. A preferred sheet is one selected from the group consisting of a sheet of paper, a sheet of plastic and a sheet of a laminate or a combination of at least two thereof. A preferred sheet of paper is a banknote. A preferred banknote is a machine readable banknote. Another preferred banknote is a euro note. A preferred sheet of plastic is a smart card or an integrated circuit card or both. Another preferred sheet is one selected from the group consisting of an identification document, a passport, a certificate, a seal, a stamp or a combination of at least two thereof.

It is further disclosed a process for making a composite comprising as steps:
a) providing a substrate, comprising a substrate surface;
b) superimposing a polymer layer on the substrate surface,
   wherein the polymer layer comprises
   i) a polymer,
   ii) a polymer layer surface;
c) irradiating an area of the polymer layer surface by UV-light;
wherein after step c) the polymer layer surface comprises a first area and a further area
wherein an absolute value of a difference between a wetting angle for wetting with water of the first area and a wetting angle for wetting with water of the further area is at least about 10°, preferably at least about 15°, more preferably at least about 20°, even more preferably at least about 25°, most preferably at least about 30°. A preferred polymer is an electrically conductive polymer. A preferred electrically conductive polymer is PEDOT:PSS. Preferred UV-light is characterised by a wavelength in the range from about 185 to about 254 nm, preferably in the range from about 185 to about 225 nm. A preferred duration of irradiating the area of the polymer layer by UV-light is in the range from about 1 to about 5 s, more preferably from about 3 to about 5 s. A preferred flux density of the UV-light irradiating the polymer layer surface is in the range from about 150 to about 250 mW/m², more preferably from about 175 to about 225 mW/m², even more preferably from about 185 to about 215 mW/m², most preferably from about 195 to about 205 mW/m². Preferably, a part of the polymer layer surface is shielded by a mask against the UV-light during irradiating. Preferably, the mask does not shield the first area of the polymer layer surface against the UV-light during the irradiating. In another preferred process according to the invention the mask does not shield the further area of the polymer layer surface against the UV-light during the irradiating. Preferably, the mask has a temperature in the range from about 100 to about 120°C, preferably from about 105 to about 115°C, more preferably from about 108 to about 112°C.

In an embodiment of the invention a process is characterised in that superimposing is one selected from the group consisting of printing, spraying, dipping, coating, casting, laminating or a combination of at least two thereof. A preferred kind of printing is selected from the group consisting of gravure printing, intaglio, mesh printing or a combination of at least two thereof. A preferred kind of coating is spin coating or slit coating or both wherein slit coating is more preferred.

It is further disclosed a composite obtainable by any process according to the present disclosure.

In an embodiment of the invention a composite is characterised in that the polymer layer fulfills at least one, preferably 2 or more, or all of the following criteria:
a) an IR-absorption of the first area is at least about 2 times, preferably at least about 3 times, more preferably at least about 4 times, most preferably at least about 5 times, as high as an IR-absorption of the further area;
b) an electrical conductivity of the further area is at least about 4 times, preferably at least about 5 times, more preferably at least about 6 times, most preferably at least about 7 times, as high as an electrical conductivity of the first area;
c) at least part of the polymer layer surface has a surface resistance in the range from about 5 to about 10¹⁰ Ω/square, preferably in the range from about 10 to about 0.5×10¹⁰ Ω/square, more preferably in the range from about 100 to about 10⁹ Ω/square, even more preferably in the range from about 1000 to about 10⁸ Ω/square, most preferably in the range from about 10⁴ to about 10⁷ Ω/square;
d) the polymer layer is optically transparent;
e) the polymer layer has a thickness in the range from about 0.01 to about 500 µm, preferably in the range from about 0.01 to about 5 µm, more preferably in the range from about 0.05 to about 4.5 µm, more preferably in the range from about 0.1 to about 4 µm, even more preferably in the range from about 0.2 to about 3.5 µm, most preferably in the range from about 0.5 to about 3 µm.

Preferred compositions of the invention are characterised by each of the following combinations of the above criteria: a) b) or a) d). The IR-absorption is an absorption of light having a wavelength in the range from about 800 to about 850 nm.

### layers

For the use throughout this document a layer is a body which extends into a first, a second and a third Cartesian coordinate direction in space, wherein the body extends into the first and the second direction over a longer length than into the third direction. A preferred layer is a coating. A layer surface is one of the two surfaces of a layer which have the largest surface area of all the surfaces of the layer. A layer superimposes a layer surface of a second layer if the layer follows the second layer in the direction which the layer surface faces. A layer which superimposes a layer surface maybe bonded to the layer surface. A preferred bond is a physical bond or a chemical bond or both. A layer which superimposes a layer surface may follow the layer surfaces directly or there may be additional layers, substances or objects between the layer and the layer surface which is superimposed by the layer. Any layer may comprise sublayers.

### substrate

A substrate can be any object which comprises a substrate surface on which a polymer layer according the invention can be superimposed. A substrate can be embodied as a substrate layer. A preferred substrate is an object which is to be marked by a security feature according to the invention. Another preferred substrate is a substrate layer superimposed on an object which is to be marked by a security feature according to the invention. Another preferred substrate is one selected from the group consisting of a paper, a laminate, a plastic layer, a metal foil, a glass sheet or a combination of at least two thereof.

### electrically conductive polymer

Here in particular, *"electrically conductive polymers"* are understood as meaning the compound class of π-conjugated polymers which have an electrical conductivity after oxidation or reduction. Preferably, electrically conductive polymers are understood as meaning those π-conjugated polymers which, after oxidation, have an electrical conductivity of the order of at least 0.1 S cm⁻¹. According to a particularly preferred embodiment according to the invention, the conductive polymer comprises an anion, preferably a polyanion. Anions and cations are then present in the conductive polymer. The two components together then form the conductive polymer.

In this connection, it is particularly preferable for the conductive polymer to comprise a polythiophene, particularly preferably a polythiophene with recurring units of the general formula (I) or (II) or a combination of units of the general formulae (I) and (II), preferably a polythiophene with recurring units of the general formula (II) 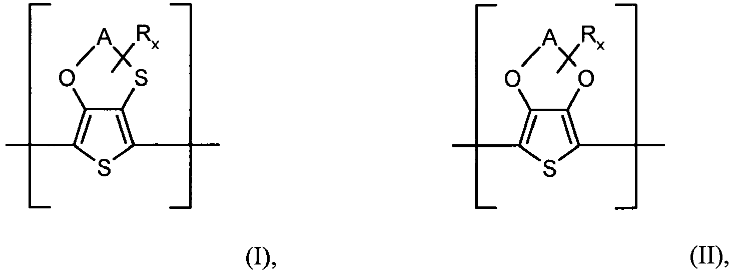 wherein
A represents an optionally substituted C₁-C₅-alkylene radical,
R represents a linear or branched, optionally substituted C₁-C₁₈-alkyl radical, an optionally substituted C₅-C₁₂-cycloalkyl radical, an optionally substituted C₆-C₁₄-aryl radical, an optionally substituted C₇-C₁₈-aralkyl radical, an optionally substituted C₁-C₄-hydroxyalkyl radical or a hydroxyl radical,
x represents an integer from 0 to 8 and
in the case where several radicals R are bonded to A, these can be identical or different.

The general formulae (I) and (II) are to be understood as meaning that x substituents R can be bonded to the alkylene radical A.

Polythiophenes with recurring units of the general formula (II) wherein A represents an optionally substituted C₂-C₃-alkylene radical and x represents 0 or 1 are particularly preferred. Poly(3,4-ethylenedioxythiophene), which is optionally substituted, is very particularly preferred as the conductive polymer of the solid electrolyte.

In the context of the invention, the prefix poly- is to be understood as meaning that the polymer or polythiophene contains more than one identical or different recurring units of the general formula (I) or (II). In addition to the recurring units of the general formula (I) or (II), the polythiophenes can optionally also comprise other recurring units, but it is preferable for at least 50 %, particularly preferably at least 75 % and most preferably at least 95 % of all recurring units of the polythiophene to have the general formula (I) and/or (II), particularly preferably (II). The polythiophenes contain n recurring units of the general formula (I) and/or (II) in total, wherein n is an integer from 2 to 2,000, preferably 2 to 100. The recurring units of the general formula (I) or (II) can in each case be identical or different within a polythiophene. Polythiophenes with in each case identical recurring units of the general formula (II) are preferred.

The polythiophenes preferably in each case carry H on the end groups.

In the context of the invention, C₁-C₅-alkylene radicals A are preferably methylene, ethylene, n-propylene, n-butylene or n-pentylene. C₁-C₁₈-alkyl radicals R preferably represent linear or branched C₁-C₁₈-alkyl radicals, such as methyl, ethyl, n- or iso-propyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethyl-propyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, C₅-C₁₂-cycloalkyl radicals R represent, for example, cyclopentyl, cyclohexyl, cycloheptyl, cyclooctyl, cyclononyl or cyclodecyl, C₅-C₁₄-aryl radicals R represent, for example, phenyl or naphthyl, and C₇-C₁₈-aralkyl radicals R represent, for example, benzyl, o-, m-, p-tolyl, 2,3-, 2,4-, 2,5-, 2,6-, 3,4-, 3,5-xylyl or mesityl. The preceding list serves to illustrate the invention by way of example and is not to be considered conclusive.

In the context of the invention, numerous organic groups are possible optional further substituents of the radicals A and/or of the radicals R, for example alkyl, cycloalkyl, aryl, aralkyl, alkoxy, halogen, ether, thioether, disulphide, sulphoxide, sulphone, sulphonate, amino, aldehyde, keto, carboxylic acid ester, carboxylic acid, carbonate, carboxylate, cyano, alkylsilane and alkoxysilane groups and carboxamide groups.

The polythiophenes contained in the conductive polymer can be neutral or cationic. In preferred embodiments they are cationic, *"cationic"* relating only to the charges on the polythiophene main chain. The polythiophenes can carry positive and negative charges in the structural unit, depending on the substituent on the radicals R, the positive charges being on the polythiophene main chain and the negative charges optionally being on the radicals R substituted by sulphonate or carboxylate groups. In this context, the positive charges of the polythiophene main chain can be partly or completely satisfied by the anionic groups optionally present on the radicals R. Overall, in these cases the polythiophenes can be cationic, neutral or even anionic. Nevertheless, in the context of the invention they are all regarded as cationic polythiophenes, since the positive charges on the polythiophene main chain are the deciding factor. The positive charges are not shown in the formulae, since their precise number and position cannot be determined absolutely. However, the number of positive charges is at least 1 and at most n, wherein n is the total number of all recurring units (identical or different) within the polythiophene.

To compensate the positive charge, if this is not already done by the optionally sulphonate- or carboxylate-substituted and therefore negatively charged radicals R, the cationic polythiophenes require anions as counter-ions, it being possible for the counter-ions to be monomeric or polymeric anions. Polymeric anions are also called polyanions in the following. In the case where polyanions are employed, it is particularly preferable for the conductive polymer to comprise complexes of polythiophenes and polyanions, very particularly preferably complexes of poly(3,4-ethylenedioxythiophene) and polystyrenesulphonic acid.

Polyanions are preferable to monomeric anions, since they contribute towards film formation and because of their size lead to electrically conductive films which are more stable to heat. Polyanions here can be, for example, anions of polymeric carboxylic acids, such as polyacrylic acids, polymethacrylic acid or polymaleic acids, or of polymeric sulphonic acids, such as polystyrenesulphonic acids and polyvinylsulphonic acids. These polycarboxylic and -sulphonic acids can also be copolymers of vinylcarboxylic and vinylsulphonic acids with other polymerisable monomers, such as acrylic acid esters and styrene. Particularly preferably, the solid electrolyte contains an anion of a polymeric carboxylic or sulphonic acid for compensation of the positive charge of the polythiophene.

The anion of polystyrenesulphonic acid (PSS), which, if a polythiophene is used, in particular poly(3,4-ethylenedioxythiophene), is preferably present bonded as a complex in the form of the PEDOT:PSS complexes known from the prior art, is particularly preferred as the polyanion. Such complexes are obtainable by polymerising the thiophene monomers, preferably 3,4-ethylenedioxythiophene, oxidatively in aqueous solution in the presence of polystyrenesulphonic acid.

The molecular weight of the polyacids which supply the polyanions is preferably 1,000 to 2,000,000, particularly preferably 2,000 to 500,000. The polyacids or their alkali salts are commercially obtainable, e.g. polystyrenesulphonic acids and polyacrylic acids, or can be prepared by known processes (see e.g. Houben Weyl, Methoden der organischen Chemie, vol. E 20 Makromolekulare Stoffe, part 2, (1987), p. 1141 et seq.).

Polyanions and polythiophenes, in particular polystyrenesulphonic acid and poly(3,4-ethylenedioxythiophene) can be present in the conductive polymer and also in the solid electrolyte in a weight ratio of from 0.5:1 to 50:1, preferably from 1:1 to 30:1, particularly preferably 2:1 to 20:1. The weight of the electrically conducting polymers here corresponds to the weight of the monomers employed for the preparation of the conductive polymers, assuming that complete conversion takes place during the polymerisation. According to a particular embodiment of the capacitor according to the invention, the polystyrenesulphonic acid is present in an excess by weight compared with the polythiophene, in particular poly(3,4-ethylenedioxythiophene).

Monomeric anions which are used are, for example, those of C₁-C₂₀-alkanesulphonic acids, such as methane-, ethane-, propane-, butanesulphonic acid or higher sulphonic acids, such as dodecanesulphonic acid, of aliphatic perfluorosulphonic acids, such as trifluoromethanesulphonic acid, perfluorobutanesulphonic acid or perfluorooctanesulphonic, of aliphatic C₁-C₂₀-carboxylic acids, such as 2-ethylhexylcarboxylic acid, of aliphatic perfluorocarboxylic acids, such as trifluoroacetic acid or perfluorooctanoic acid, and of aromatic sulphonic acids optionally substituted by C₁-C₂₀-alkyl groups, such as benzenesulphonic acid, o-toluenesulphonic acid, p-toluenesulphonic acid or dodecylbenzenesulphonic acid, and of cycloalkanesulphonic acids, such as camphorsulphonic acid, or tetrafluoroborates, hexafluorophosphates, perchlorates, hexafluoroantimonates, hexafluoroarsenates or hexachloroantimonates.

### optically transparent

For the use throughout this document, a layer is optically transparent if the layer has a transmission coefficient of at least about 0.4, preferably at least about 0.5, more preferably at least about 0.6, still more preferably at least about 0.7, even more preferably at least about 0.8, most preferably at least about 0.9, for a light. Preferred light is visible light. Preferred visible light is light having a wavelength in the range from about 400 to about 700 nm. A layer is optically transparent for a body or a feature or both if the layer is optically transparent for light being reflected or diffracted or both by the feature or body or both respectively.

### metal layer

For the use throughout this document, a preferred metal layer comprises a metal in an amount of at least about 50 wt.-%, preferably at least about 60 wt.-%, more preferably at least about 70 wt.-%, even more preferably at least about 80 wt.-%, most preferably at least about 90 wt.-%, based on the total weight of the metal layer. A preferred metal is aluminium.

### TEST METHODS

The following test methods are used in the invention. In absence of a test method, the ISO test method for the feature to be measured being closest to the earliest filing date of the present application applies. In absence of distinct measuring conditions, standard ambient temperature and pressure (SATP) as a temperature of 298.15 K (25 °C, 77 °F) and an absolute pressure of 100 kPa (14.504 psi, 0.986 atm) apply.

### layer thickness

The layer thickness was measured by stylus profilometer (Veeco, Dektak 150).

### wetting angle for wetting with water

To measure the wetting angle for wetting with water an EasyDrop DSA20E equipment with automatic dosage system from Krüss GmbH with CF4000 camera module and SW4001 software was used. A droplet of distilled water was placed by a syringe on the first area and the further area respectively and a contact angle was determined.

### transmission coefficient (luminous transmittance)

The luminous transmittance is measured according to the wavelength in accordance with ASTM D 1003 and used to calculate the standard colour value Y-often also referred to as brightness-in accordance with ASTM E308. For a completely transparent sample Y=100, for an opaque sample Y=0. In light engineering terms, Y(D65/10[deg.]) is understood to be the standard colour value calculated using the standard light type D65 observed at an angle of 10[deg.] (cf. ASTM E308). The stated standard colour values refer to the pure layer, i.e. an uncoated substrate is also measured as a control. A sample prepared for measurement is defined as dry; a sample to which water has been applied for measurement is defined as wetted with water.

### contrast range

A CIS line scan camera with 1024 pixels (ELIS 1204 USB board from Eureca Messtechnik GmbH) and an LED light source (LL304 530nm from Eureca Messtechnik GmbH) are aligned in parallel aiming at a measuring table and both having a distance to the measuring table of 5 mm. The measuring table is moveable in both lateral Cartesian directions x and y. A white screen is placed on the measuring table. The line scan camera and the LED light source are activated. A sample to be measured is positioned on the white screen in such a way that the sample is completely illuminated by the LED light source. The LED light source is adjusted in order not to overexpose the line scan camera. While the above basic adjustments are realised, the sample is not moved. For the measurement the measuring table with the sample is moved in increments of 0.5 mm. At each increment a measuring picture is taken by the line scan camera. This is done in x and y directions separately until the whole area of the sample which is to be measured has been scanned. Each measuring picture taken by the line scan camera is evaluated by a corresponding software (visualising software from Spectronic Devices Ltd) of the line scan camera. In result, the software provides the contrast range of the scanned area of the sample.

### IR-absorption

A CIS line scan camera with 1024 pixels (ELIS 1204 USB board from Eureca Messtechnik GmbH) and an LED light source (LL304 850nm from Eureca Messtechnik GmbH) are aligned in parallel aiming at a measuring table and both having a distance to the measuring table of 5 mm. The line scan camera is selectively shielded against light by an optical bandpass filter, which does not filter light at a wavelength of 850 nm. The measuring table is moveable in both lateral Cartesian directions x and y. A white screen is placed on the measuring table. The line scan camera and the LED light source are activated. A sample to be measured is positioned on the white screen in such a way that the sample is completely illuminated by the LED light source. The LED light source is adjusted in order not to overexpose the line scan camera. While the above basic adjustments are realised, the sample is not moved. For the measurement the measuring table with the sample is moved in increments of 0.5 mm. At each increment a measuring picture is taken by the line scan camera. This is done in x and y directions separately until the whole area of the sample which is to be measured has been scanned. Each measuring picture taken by the line scan camera is evaluated by a corresponding software (visualising software from Spectronic Devices Ltd) of the line scan camera. In result, the software provides the absorption of light with a wavelength of 850 nm by the scanned area of the sample.

### electrical conductivity

Electrical conductivity is understood to be the reciprocal of the specific resistance. This is calculated from the product of the surface resistance and film thickness (mean value of two measurements on different positions of the film) of the conductive polymer layer. The surface resistance for conductive polymers is measured in accordance with DIN EN ISO 3915, the thickness of the polymer layer using a stylus profilometer.

### surface resistance

The surface resistance for conductive polymers is measured in accordance with DIN EN ISO 3915.

### EXAMPLES

The present invention is now explained in more detail by examples and drawings given by way of example which do not limit it.

### Example 1:

### Conductive polymer formulation:

In a 250 mL glass beaker equipped with a magnetic stirring bar, 45 g of Clevios™ P (from Heraeus Precious Metals GmbH) was placed. Under stirring, 4 g of Ethyleneglycol, 0,5 g Silquest A187 (Momentive), 50.2 g Isopropanol, and 0,3 g Dynol 604 (AirProducts) was added subsequently. Stirring was continued for 30 minutes.

### Coating:

A 24 micron wet-film of above solution was coated on a PET film (Melinex 505) by a wire-bar coater (RK Print-Coat Instruments Ltd.) and the film was dried in an oven with forced convection (Heraeus) for 2 minutes at 130°C.

### UV irradiation:

The coated film is fixed to a carrier metal plate (fixture) with the coated side facing up. A metal mask with 6 slits that are 5 mm wide and 40 mm long and separated by 5 mm is placed on the coated film. The fixture is inserted in a box containing a HQL UV lamp with 1000 W electric power. The distance of sample to UV lamp is ca. 8 mm and the temperature in the box around 220°C. Irradiation time is 4 seconds after which the fixture with sample is taken out. UV exposed areas are first areas and unexposed areas protected from the mask are further areas.

The wetting angles of water on the first and the further were measured.

### Visualisation:

The UV irradiated sample could be easily visualised by exhaling on the coating of the sample and the pattern of the metal slit mask becomes clearly visible instantly for a few seconds and then disappears again. Visualisation by exhalation is fully reversible and repeatable.

### Example 2:

Eastek 1200-02 (Eastman Chemical Company) is coated on a Melinex 505 substrate by a 24 micron wirebar coater and dried at 130°C for 2 minutes in an oven with forced convection. The UV irradiation and measurement of wetting angle of water on the first area and the further area were done in the same way as described in Example 1.

Visualisation by exhaling showed the pattern of the mask instantly, however, the pattern appears inverse in comparison to Example 1.

### Example 3:

Experiment 2 was repeated but NeoRez R986 (DSM) was used instead of Eastek 1200-02. Visualisation by exhaling like in Example 1 was not possible and no pattern could be observed.

### Example 4:

Experiment 2 was repeated but Clevios™ F 141M (Heraeus Precious Metals GmbH) conductive polymer coating formulation was used instead of Eastek 1200-02.

The pattern could be visualised by exhaling in the same way as in Example 1, but with less contrast.

### Example 5:

A formulation from 30g Clevios™ P, 110 g deionised water, 6 g Eastek 1200-02, 2 g Acrafix ML (Tanatex Chemicals, 0,4 g Dynol 604 and 50 g Isopropanol was prepared according to the procedure in Example 1.

This formulation was used instead of Eastek 1200-02 for repeating Example 2.

Visualisation of pattern by exhalation was possible and contrast excellent.

**Table 1**

| | Wetting angle of water on first area | Wetting angle of water on further area | Absolute value of contact angle difference |
|---|---|---|---|
| Example 1 | 43° | 72° | 29° |
| Example 2 | 77° | 59° | 18° |
| Example 3 | 68° | 67° | 1° |
| Example 4 | 58° | 70° | 12° |
| Example 5 | 57° | 88° | 31° |

### Example 6:

A coated substrate was prepared in the same way as Example 1 and then UV irradiated with a mask having a circular hole of 12 mm diameter instead of the slit mask.
By means of a cold roll laminator, the substrate bottom side was combined with a hologram, which shows a holographic image of a ball being 12 mm in diameter, by a double-sided adhesive tape (Creafix Spezial from HobbyFun Company, Germany). The bottom side of the UV exposed circle was positioned to superimpose the holographic image before lamination. When the polymer layer surface was exhaled upon the contrast range of the holographic image increased by more than 15 %. The increase of the contrast range is quantified by the above test method "contrast range ".

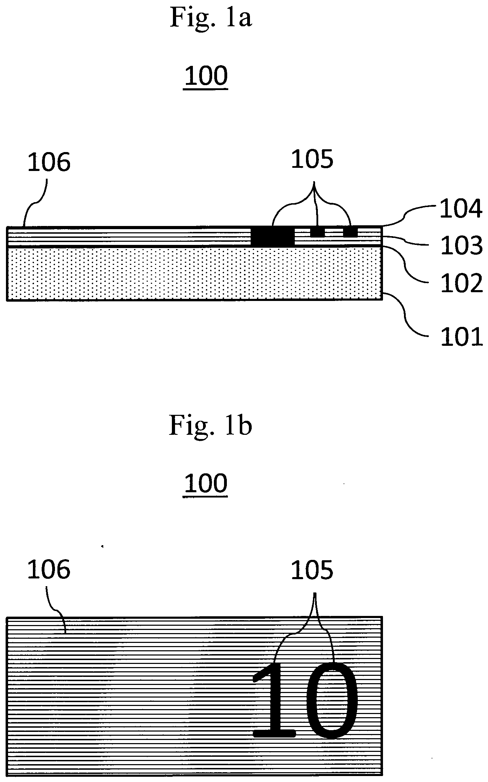

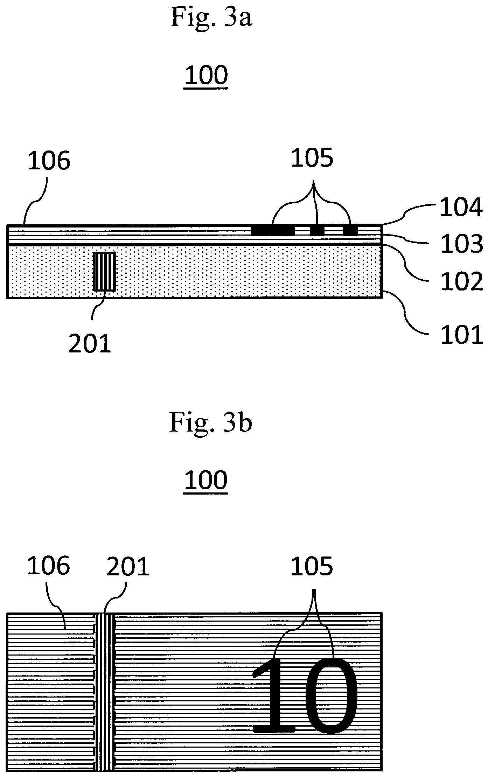

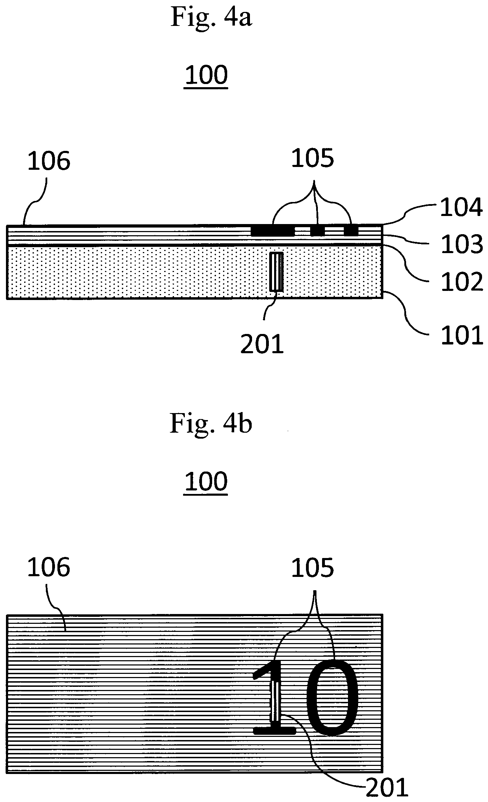

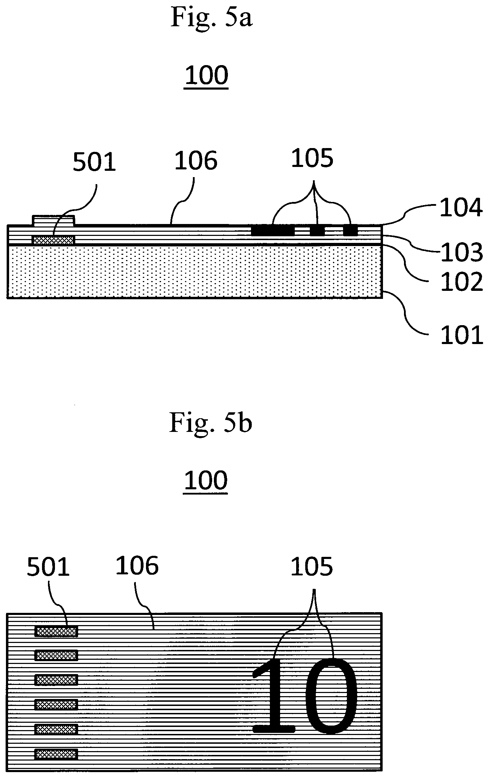

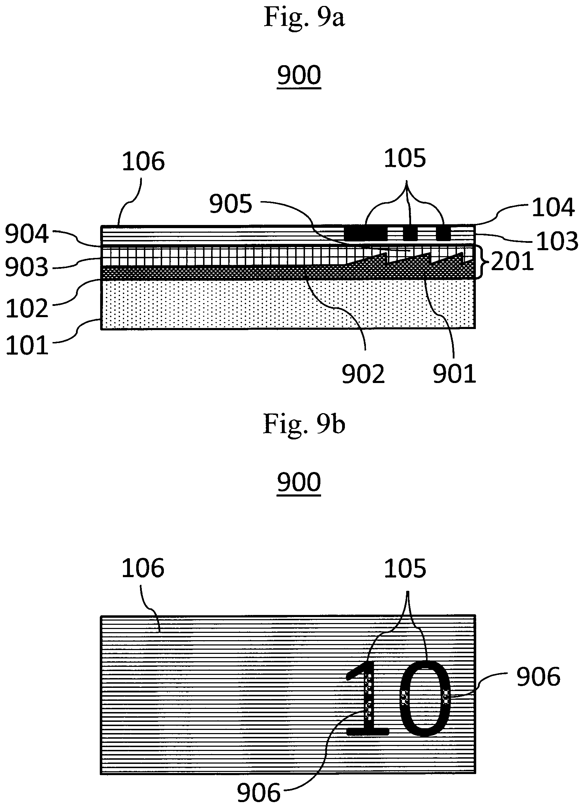

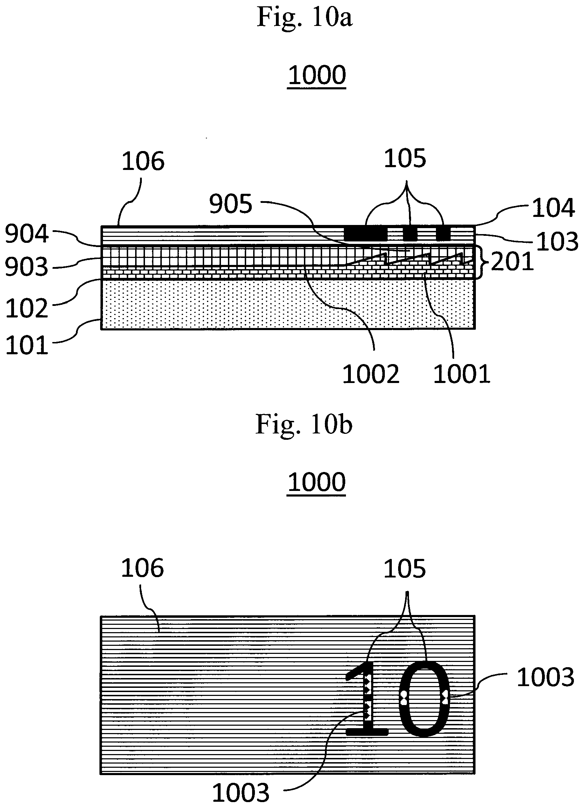

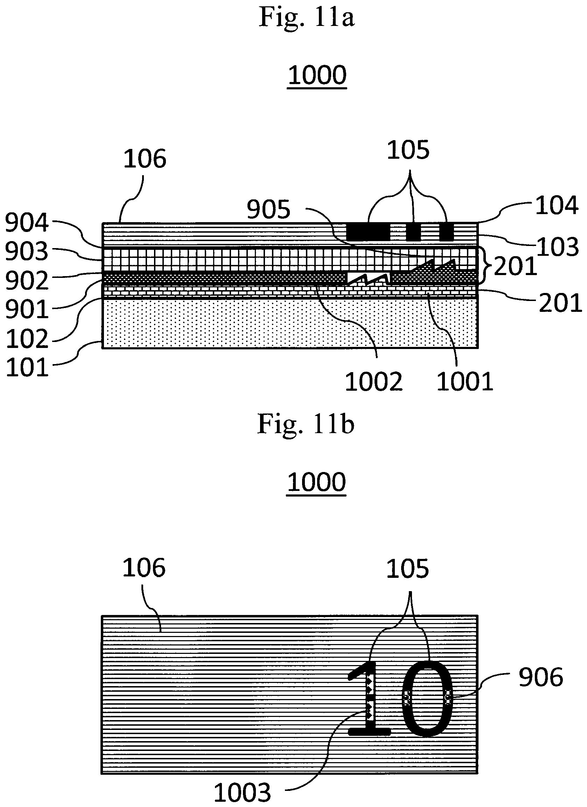

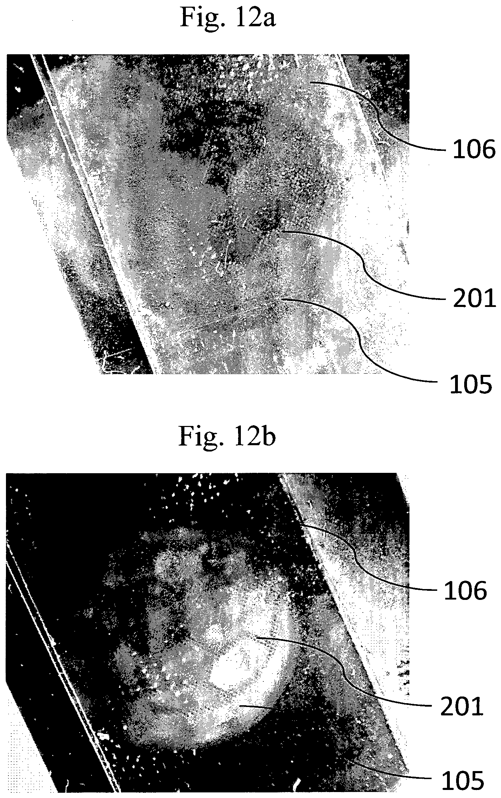

The figures show
- 1a: a schematic cross sectional side view of composite according to the invention;
- 1b: a schematic top view of the composite in figure 1a;
- 2a: a schematic cross sectional side view of a composite according to the invention comprising an optical feature;
- 2b: a schematic cross sectional side view of another composite according to the invention comprising an optical feature;
- 3a: a schematic cross sectional side view of another composite according to the invention comprising an optical feature;
- 3b: a schematic top view of the composite in figure 3a;
- 4a: a schematic cross sectional side view of another composite according to the invention comprising an optical feature;
- 4b: a schematic top view of the composite in figure 4a;
- 5a: a schematic cross sectional side view of a composite according to the invention comprising a haptic feature;
- 5b: a schematic top view of the composite in figure 5a;
- 6a: a schematic cross sectional side view of another composite according to the invention comprising a haptic feature;
- 6b: a schematic top view of the composite in figure 5a;
- 7: a schematic cross sectional side view of another composite according to the invention;
- 8: a schematic cross sectional side view of a setup for a process according to the invention;
- 9a: a schematic cross sectional side view of another composite according to the invention comprising an optical feature;
- 9b: a schematic top view of the composite in figure 9a;
- 10a: a schematic cross sectional side view of another composite according to the invention comprising an optical feature;
- 10b: a schematic top view of the composite in figure 10a;
- 11a: a schematic cross sectional side view of another composite according to the invention comprising an optical feature;
- 11b: a schematic top view of the composite in figure 11a.
- 12a: a top view photograph of another composite according to the invention comprising an optical feature, wherein the first layer is dry;
- 12b: another top view photograph of the composite in figure 12a, wherein the first layer is wet;

Figure 1a shows a schematic cross sectional side view of a composite 100 according to the invention. The composite 100 comprises a substrate 101 having a substrate surface 102. The substrate 101 is a sheet of paper 101. The substrate surface 102 is superimposed by a polymer layer 103 having a polymer layer surface 104. The polymer layer 103 comprises PEDOT:PSS. The polymer layer 103 directly follows the substrate surface 102. The polymer layer surface 104 comprises a first area 105 and a further area 106. Therein an absolute value of a difference between a wetting angle for wetting with water of the first area 105 and a wetting angle for wetting with water of the further area 106 is at least about 10°. The polymer layer 103 is invisible to the bare eye until the first area 105 is wetted. Wetting can be realised as wetting with water by exhaling onto the first area 105. The composite 100 shown in figure 1a is a banknote 100.

Figure 1b shows the composite 100 of figure 1a in a schematic top view. The first area 105 has the form of numbers. The numbers give the monetary value of the banknote 100. The numbers are invisible to the bare eye until the first area 105 is wetted. Wetting can be realised as wetting with water by exhaling onto the first area 105.

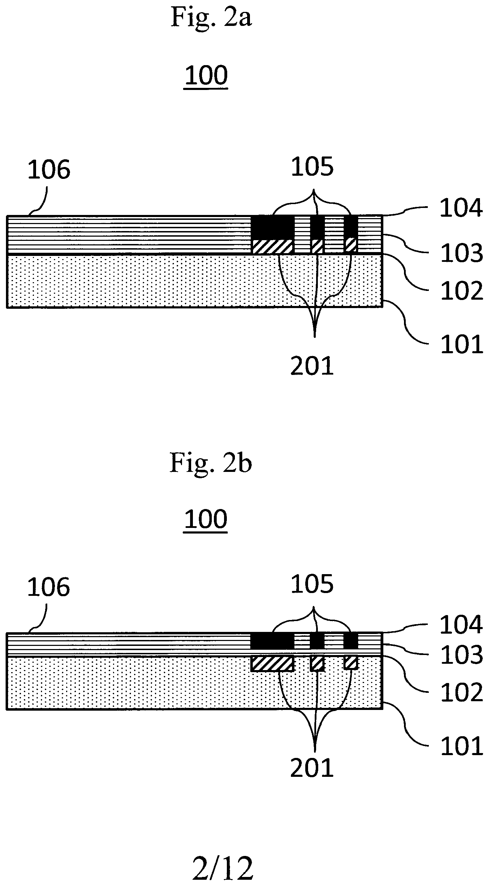

Figure 2a shows a schematic cross sectional side view of a composite 100 according to the invention. The composite 100 comprises a substrate 101 having a substrate surface 102. The substrate is a laminate. The substrate surface 102 is superimposed by an optical feature 201. The optical feature 201 is a picture 201. The picture 201 and the substrate surface 102 are superimposed by a polymer layer 103 having a polymer layer surface 104. Therein the picture 201 is embedded in the polymer layer 103. The polymer layer 103 comprises an electrically conductive polymer. The polymer layer 103 is optically transparent for the picture 201. The polymer layer surface 104 comprises a first area 105 and a further area 106. Therein an absolute value of a difference between a wetting angle for wetting with water of the first area 105 and a wetting angle for wetting with water of the further area 106 is about 20°. The first area 105 superimposes the picture 201. The polymer layer 103 is invisible to the bare eye until the first area 105 is wetted. Wetting can be realised as wetting with water by exhaling onto the first area 105. If the first area 105 is visualised by exhaling onto it, a contrast range of the picture 201 is increased by about 25 %.

Figure 2b shows a schematic cross sectional side view of another composite 100 according to the invention. The composite 100 comprises a substrate 101 having a substrate surface 102. The substrate is a laminate comprising a plurality of plastic layers. An optical feature 201 is embedded into the substrate 101 wherein the optical feature 201 is not covered by the substrate surface 102. The optical feature 201 is a picture 201. The picture 201 and the substrate surface 102 are superimposed by a polymer layer 103 having a polymer layer surface 104. The polymer layer 103 comprises an electrically conductive polymer. The polymer layer 103 is optically transparent for the picture 201. The polymer layer surface 104 comprises a first area 105 and a further area 106. Therein an absolute value of a difference between a wetting angle for wetting with water of the first area 105 and a wetting angle for wetting with water of the further area 106 is about 20°. The first area 105 superimposes the picture 201. The polymer layer 103 is invisible to the bare eye until the first area 105 is wetted. Wetting can be realised as wetting with water by exhaling onto the first area 105. If the first area 105 is visualised by exhaling onto it, a contrast range of the picture 201 is increased by about 25 %. The composite 100 is a passport 100.

Figure 3a shows a schematic cross sectional side view of another composite 100 according to the invention. The composite 100 comprises a substrate 101 having a substrate surface 102. The substrate 101 is a sheet of paper 101. The composite 100 comprises an optical feature 201 as an inclusion of the paper 101. The optical feature 201 is a metal stripe 201. The substrate surface 102 is superimposed by a polymer layer 103 having a polymer layer surface 104. The polymer layer 103 directly follows the substrate surface 102. The polymer layer 103 is optically transparent for the metal stripe 201. The polymer layer surface 104 comprises a first area 105 and a further area 106. Therein an absolute value of a difference between a wetting angle for wetting with water of the first area 105 and a wetting angle for wetting with water of the further area 106 is at least about 10°. The first area 105 does not superimpose the metal stripe 201. The polymer layer 103 is invisible to the bare eye until the first area 105 is wetted. Wetting can be realised as wetting with water by exhaling onto the first area 105. The composite 100 shown in figure 3a is a banknote 100.

Figure 3b shows the banknote 100 of figure 3a in a schematic top view. The first area 105 has the form of numbers. The numbers give the monetary value of the banknote 100. The numbers are invisible to the bare eye until the first area 105 is wetted.

Figure 4a shows a schematic cross sectional side view of another composite 100 according to the invention. The composite 100 comprises a substrate 101 having a substrate surface 102. The substrate 101 is a sheet of paper 101. The composite 100 comprises an optical feature 201 as an inclusion. The optical feature 201 is a watermark 201. The substrate surface 102 is superimposed by a polymer layer 103 having a polymer layer surface 104. The polymer layer 103 directly follows the substrate surface 102. The polymer layer 103 is optically transparent for the watermark 201. The polymer layer surface 104 comprises a first area 105 and a further area 106. Therein an absolute value of a difference between a wetting angle for wetting with water of the first area 105 and a wetting angle for wetting with water of the further area 106 is at least about 10°. The composite 100 shown in figure 4a is a banknote 100.

Figure 4b shows the banknote 100 of figure 4a in a schematic top view. The first area 105 has the form of numbers wherein a part of the numbers is missing. The missing part of the numbers is formed by the watermark 201. Thus, looking from the top at the banknote 100 the first area 105 and the watermark 201 combine to form the numbers. The polymer layer 103 is invisible to the bare eye until the first area 105 is wetted. Wetting can be realised as wetting with water by exhaling onto the first area 105. Thus, after exhaling onto the first area 105 the full numbers including the missing part can be seen by the bare eye. The numbers give the monetary value of the banknote 100.

Figure 5a shows a schematic cross sectional side view of another composite 100 according to the invention. The composite 100 comprises a substrate 101 having a substrate surface 102. The substrate 101 is a sheet of paper 101. The composite 100 comprises a haptic feature 501. The haptic feature 501 is an embossed printing 501. The embossed printing 501 is printed directly onto the paper 101. The embossed printing 501 and the substrate surface 102 are superimposed by a polymer layer 103 having a polymer layer surface 104. Therein the embossed printing 501 is embedded in the polymer layer 103. The polymer layer 103 is haptically transparent for the embossed printing 501. Sensing the polymer layer surface 104 with a finger tip a form of the embossed printing 501 can be realised. The polymer layer surface 104 comprises a first area 105 and a further area 106. Therein an absolute value of a difference between a wetting angle for wetting with water of the first area 105 and a wetting angle for wetting with water of the further area 106 is at least about 10°. The first area 105 does not superimpose the embossed printing 501. The polymer layer 103 is invisible to the bare eye until the first area 105 is wetted. Wetting can be realised as wetting with water by exhaling onto the first area 105. The composite 100 shown in figure 5a is a banknote 100.

Figure 5b shows the banknote 100 of figure 5a in a schematic top view. The first area 105 has the form of numbers. The numbers give the monetary value of the banknote 100. The numbers are invisible to the bare eye until the first area 105 is wetted. Wetting can be realised as wetting with water by exhaling onto the first area 105.

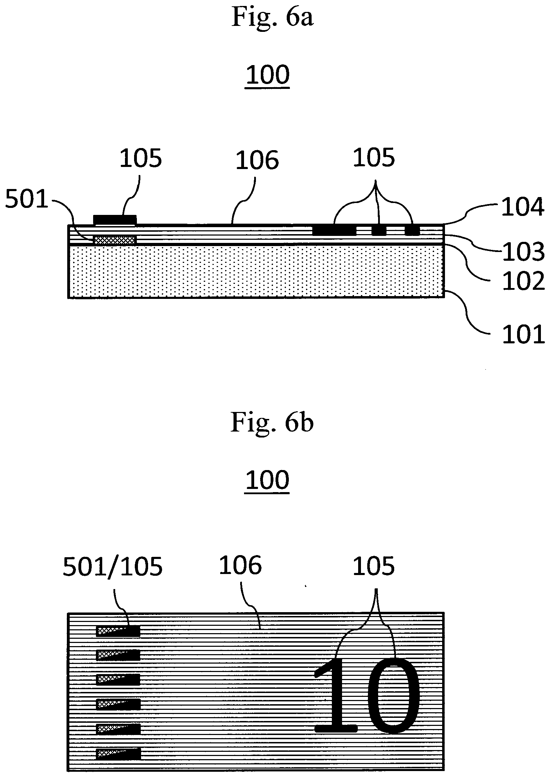

Figure 6a shows a schematic cross sectional side view of another composite 100 according to the invention. The composite 100 comprises a substrate 101 having a substrate surface 102. The substrate 101 is a sheet of paper 101. The composite 100 comprises a haptic feature 501. The haptic feature 501 is a bold relief 501. The bold relief 501 is printed directly onto the paper 101. The bold relief 501 and the substrate surface 102 are superimposed by a polymer layer 103 having a polymer layer surface 104. Therein the bold relief 501 is embedded in the polymer layer 103. The polymer layer 103 is haptically transparent for the bold relief 501. Sensing the polymer layer surface 104 with a finger tip a form of the bold relief 501 can be realised. The polymer layer surface 104 comprises a first area 105 and a further area 106. Therein an absolute value of a difference between a wetting angle for wetting with water of the first area 105 and a wetting angle for wetting with water of the further area 106 is at least about 10°. The first area 105 superimposes the bold relief 501. The polymer layer 103 is invisible to the bare eye until the first area 105 is wetted. Wetting can be realised as wetting with water by exhaling onto the first area 105. The composite 100 shown in figure 6a is a banknote 100.

Figure 6b shows the banknote 100 of figure 6a in a schematic top view. A part of the first area 105 has the form of numbers. The numbers give the monetary value of the banknote 100. Another part of the first area 105 superimposes the bold relief 501.

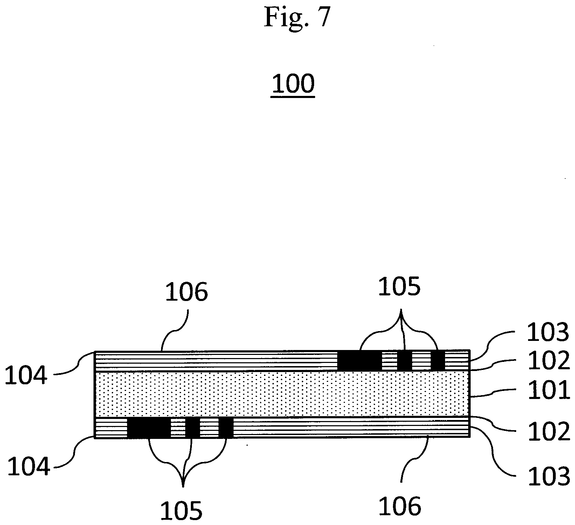

Figure 7 shows a schematic cross sectional side view of another composite 100 according to the invention. The composite 100 comprises a substrate 101 having two substrate surfaces 102. The two substrate surfaces 102 are located at opposing sides of the substrate 101. The substrate 101 is an integrated circuit card 101. The two substrate surfaces 102 are each superimposed by one of two polymer layers 103 each having a polymer layer surface 104. The polymer layers 103 directly follow one of the substrate surfaces 102. The polymer layer surfaces 104 each comprise a first area 105 and a further area 106. Therein an absolute value of a difference between a wetting angle for wetting with water of the first area 105 of a polymer layer surface 104 and a wetting angle for wetting with water of the further area 106 of the same polymer layer surface 104 is at least about 10°. The polymer layers 103 are invisible to the bare eye until the first area 105 of the corresponding polymer layer surface 104 is wetted. Wetting can be realised as wetting with water by exhaling onto the first area 105.

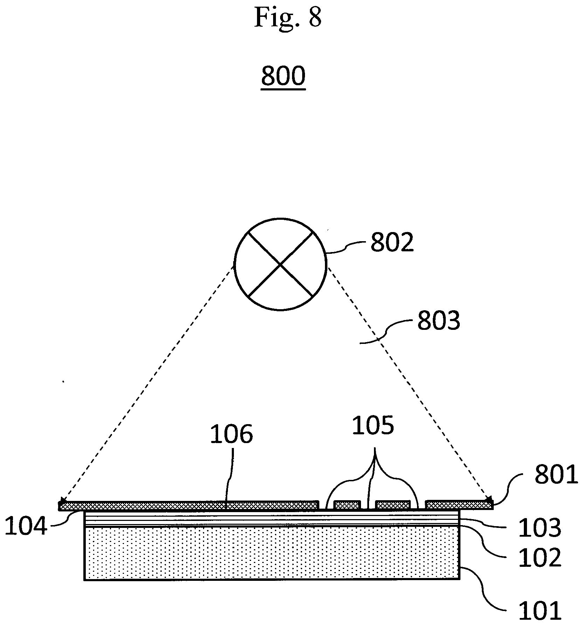

Figure 8 shows a schematic cross sectional side view of a setup for a process 800 according to the invention. The process 800 includes providing a substrate 101, comprising a substrate surface 102; superimposing a polymer layer 103 on the substrate surface 102, wherein the polymer layer 103 comprises an electrically conductive polymer and a polymer layer surface 104; irradiating an area of the polymer layer surface 104 by UV-light 803; wherein after irradiating with the UV-light 803 the polymer layer surface 104 comprises a first area 105 and a further area 106. The UV-light 803 is generated by a UV-light source 802, here a mercury vapour lamp 802. During irradiating the polymer layer surface 104 is covered by a mask 801. The further area 106 is shielded against the UV-light 803 by the mask 801. The first area 105 is not shielded against the UV-light 803. After irradiating an absolute value of a difference between a wetting angle for wetting with water of the first area 105 of a polymer layer surface 104 and a wetting angle for wetting with water of the further area 106 of the same polymer layer surface 104 is at least about 10°.

Figure 9a shows a schematic cross sectional side view of another composite 900 according to the invention. The composite 900 comprises a substrate 101 having a substrate surface 102. The substrate 101 is a sheet of paper 101. The composite 900 comprises an optical feature 201. The optical feature 201 is an optically variable device 201. The optically variable device 201 comprises a metal layer 901 having a metal layer surface 902; and a diffractive layer 903 having a diffractive layer surface 904 and a diffractive structure 905. The diffractive structure is a reflective diffraction grating 905. The metal layer 901 directly superimposes the substrate surface 102. The diffractive layer 903 directly superimposes the metal layer surface 902. The diffractive layer surface 904 is directly superimposed by a polymer layer 103 comprising a polymer layer surface 104. The polymer layer surface 104 comprises a first area 105 and a further area 106. Therein an absolute value of a difference between a wetting angle for wetting with water of the first area 105 and a wetting angle for wetting with water of the further area 106 is at least about 10°. The first area 105 superimposes the diffractive structure 905. The polymer layer 103 is optically transparent for the optically variable device 201. The composite 900 shown in figure 9a is a banknote 900.

Figure 9b shows the banknote 900 of figure 9a in a schematic top view. The first area 105 has the form of numbers wherein a part of the numbers is missing. The missing part of the numbers is formed by a picture of the optically variable device 906. Thus, looking from the top at the banknote 900 the first area 105 and the picture of the optically variable device 906 combine to form the numbers. The polymer layer 103 is invisible to the bare eye until the first area 105 is wetted. Wetting can be realised as wetting with water by exhaling onto the first area 105. Thus, after exhaling onto the first area 105 the full numbers including the missing part can be seen by the bare eye. The numbers give the monetary value of the banknote 900.

Figure 10a shows a schematic cross sectional side view of another composite 1000 according to the invention. The composite 1000 comprises a substrate 101 having a substrate surface 102. The substrate 101 is a sheet of paper 101. The composite 1000 comprises an optical feature 201. The optical feature 201 comprises a high refractive index layer 1001 having a high refractive index layer surface 1002; and a diffractive layer 903 having a diffractive layer surface 904 and a diffractive structure 905. The diffractive structure is a reflective diffraction grating 905. The high refractive index layer 1001 directly superimposes the substrate surface 102. The diffractive layer 903 directly superimposes the high refractive index layer surface 1002. The diffractive layer surface 904 is directly superimposed by a polymer layer 103 comprising a polymer layer surface 104. The polymer layer surface 104 comprises a first area 105 and a further area 106. Therein an absolute value of a difference between a wetting angle for wetting with water of the first area 105 and a wetting angle for wetting with water of the further area 106 is at least about 10°. The first area 105 superimposes the diffractive structure 905. The polymer layer 103 is optically transparent for the optical feature 201. The composite 1000 shown in figure 10a is a banknote 1000.

Figure 10b shows the banknote 1000 of figure 10a in a schematic top view. The first area 105 has the form of numbers wherein a part of the numbers is missing. The missing part of the numbers is formed by a picture of the high refractive index layer 1003. Thus, looking from the top at the banknote 1000 the first area 105 and the picture of the high refractive index layer 1003 combine to form the numbers. The polymer layer 103 is invisible to the bare eye until the first area 105 is wetted. Wetting can be realised as wetting with water by exhaling onto the first area 105. Thus, after exhaling onto the first area 105 the full numbers including the missing part can be seen by the bare eye. The numbers give the monetary value of the banknote 1000.

Figure 11a shows a schematic cross sectional side view of another composite 1000 according to the invention. The composite 1000 comprises a substrate 101 having a substrate surface 102. The substrate 101 is a sheet of paper 101. The composite 1000 comprises two optical features 201. One optical feature 201 is an optically variable device 201. The other optical feature 201 is a high refractive index layer 1001 having a high refractive index layer surface 1002. The optically variable device 201 comprises a metal layer 901 having a metal layer surface 902; and a diffractive layer 903 having a diffractive layer surface 904 and a diffractive structure 905. The diffractive structure 905 is a reflective diffraction grating 905. The high refractive index layer 1001 directly superimposes the substrate surface 102. The metal layer 901 directly superimposes the high refractive index layer surface 102 wherein not the whole area of the high refractive index layer surface 1002 is superimposed by the metal layer 901. The diffractive layer 903 directly superimposes the metal layer surface 902. The diffractive layer surface 904 is directly superimposed by a polymer layer 103 comprising a polymer layer surface 104. The polymer layer surface 104 comprises a first area 105 and a further area 106. Therein an absolute value of a difference between a wetting angle for wetting with water of the first area 105 and a wetting angle for wetting with water of the further area 106 is at least about 10°. The first area 105 at least partly superimposes the diffractive structure 905. The first area 105 superimposes that part of the high refractive index layer surface 1002 which is not superimposed by the metal layer 901. The polymer layer 103 is optically transparent for the optically variable device 201. The composite 1000 shown in figure 11a is a banknote 1000.

Figure 11b shows the banknote 1000 of figure 11a in a schematic top view. The first area 105 has the form of numbers wherein parts of the numbers are missing. The missing parts of the numbers are formed by a picture of the optically variable device 906 and a picture of the high refractive index layer 1003 respectively. Thus, looking from the top at the banknote 1000 the first area 105, the picture of the optically variable device 906 and the picture of the high refractive index layer 1003 combine to form the complete numbers. The polymer layer 103 is invisible to the bare eye until the first area 105 is wetted. Wetting can be realised as wetting with water by exhaling onto the first area 105. Thus, after exhaling onto the first area 105 the full numbers including the missing parts can be seen by the bare eye. The numbers give the monetary value of the banknote 1000.

Figure 12a shows a top view photograph of another composite 100 according to the invention comprising an optical feature 201. The composite 100 is a composite 100 according to figure 2a. The optical feature 201, which is a picture 201, figuratively shows a scheme of a football. The first layer 105 is dry. A contrast range of the picture 201 is rather poor.

Figure 12b shows another top view photograph of the composite 100 in figure 12a. The first area 105 has been wetted. Hence, the first area 105 has been visualised by exhaling onto it. The contrast range of the picture 201 is increased by about 25 %.

### LIST OF REFERENCES

- **100**: composite according to the invention
- **101**: layer
- **102**: substrate surface
- **103**: polymer layer
- **104**: polymer layer surface
- **105**: first area
- **106**: further area
- **201**: optical feature
- **501**: haptic feature
- **800**: process according to the invention
- **801**: mask
- **802**: UV-light source
- **803**: UV-light
- **900**: another composite according to the invention
- **901**: metal layer
- **902**: metal layer surface
- **903**: diffractive layer
- **904**: diffractive layer surface
- **905**: diffractive structure
- **906**: picture of an optically variable device
- **1000**: another composite according to the invention
- **1001**: high refractive index layer
- **1002**: high refractive index layer surface
- **1003**: picture of a high refractive index layer

## Claims

1. Use of a polymer layer (103) comprising a first area (105) and a further area (106) as a security feature that can be can visualised through moisture, wherein the polymer layer (103) is comprised in a composite (100) comprising:
a) a substrate (101), comprising a substrate surface (102);
b) the polymer layer (103) comprising a polymer layer surface (104), wherein the polymer layer (103)
i) comprises a polymer,
ii) at least partly superimposes the substrate surface (102);
wherein the polymer layer surface (104) comprises the first area (105) and the further area (106);
wherein an absolute value of a difference between a wetting angle for wetting with water of the first area (105) and a wetting angle for wetting with water of the further area (106) is at least 10°;
wherein the polymer is an electrically conductive polymer.

2. The use according to claim 1, wherein the conductive polymer comprises complexes of poly(3,4-ethylenedioxythiophene) and polystyrenesulphonic acid.

3. The use according to any of the preceding claims, wherein the polymer layer (103) comprises the polymer in an amount in the range from 5 to 97 wt.-% based on the total weight of the polymer layer (103).

4. The use according to any of the preceding claims, wherein the polymer layer (103) further comprises a further polymer.

5. The use according to claim 4, wherein the polymer layer (103) comprises the further polymer in an amount of at least 10 wt.-% based on the total weight of the polymer layer (103);
wherein a transmission coefficient of the first area (105) being wetted with water is at least 10 % higher than a transmission coefficient of the first area (105) being dry.

6. The use according to claim 4, wherein the polymer layer (103) comprises the further polymer in an amount of less than 20 wt.-% based on the total weight of the polymer layer (103).

7. The use according to any of the preceding claims, wherein the first area (105) is **characterised by** a wetting angle for wetting with water in the range from 10 to 150° and the further area (106) is **characterised by** a wetting angle for wetting with water in the range from 1 to 140°.

8. The use according to any of the preceding claims, wherein the composite (100) further comprises an optical feature (201),
wherein the polymer layer (103) superimposes the optical feature (201), wherein the polymer layer (103) is optically transparent for the optical feature (201).

9. The use according to claim 8, wherein the optical feature (201) is one selected from the group consisting of an optically variable device, a high refractive index layer (1001), a colour, a graphical element, a watermark, a reflective coating, an inlay or a combination of at least two thereof.

10. The use according to claim 9, wherein the optically variable device comprises a diffractive structure and optionally a metal layer (901).

11. The use according to claim 1, wherein the composite (100) comprises:
a) the substrate(101);
b) a metal layer (901), comprising a metal layer surface (902);
wherein the metal layer (901)
i) comprises a metal,
ii) at least partly superimposes the substrate surface (102);
c) a diffractive layer (903), comprising a diffractive layer surface (904);
wherein the diffractive layer (903)
i) comprises a diffractive structure,
ii) at least partly superimposes the metal layer surface (902);
d) the polymer layer (103),
wherein the polymer layer (103) at least partly superimposes the diffractive layer surface (904).

12. The use according to claim 1, wherein the composite (100) comprises:
a) the substrate (101);
b) a high refractive index layer (1001), comprising a high refractive index layer surface (1002);
wherein the high refractive index layer (1001) at least partly superimposes the substrate surface (102);
c) a diffractive layer (903), comprising a diffractive layer surface (904);
wherein the diffractive layer (903)
i) comprises a diffractive structure,
ii) at least partly superimposes the high refractive index layer surface (1002);
d) the polymer layer (103),
wherein the polymer layer (103) at least partly superimposes the diffractive layer surface (904).

13. The use according to claim 12, wherein the composite (1000) further comprises a metal layer (901), comprising a metal layer surface (902); wherein the metal layer (901)
a) comprises a metal,
b) partly superimposes the high refractive index layer surface (1002);
wherein the metal layer surface (902) is at least partly superimposed by the diffractive layer (903).

14. The use according to any of claims 12 to 13, wherein the polymer layer (103) is the polymer layer (103) of any of claims 1 to 7.

15. The use according to any of the preceding claims, wherein the composite (100, 900, 1000) further comprises a haptic feature (501),
wherein the polymer layer (103) superimposes the haptic feature (501), wherein the polymer layer (103) is haptically transparent for the haptic feature (501).

16. The use according to claim 15, wherein the haptic feature (501) is one selected from the group consisting of an embossed printing, a bold relief, a sunken relief, a braille, a texture, a perforation or a combination of at least two thereof.

17. The use according to any of the preceding claims, wherein the substrate (101) is comprised by a sheet or a non-sheet-like three-dimensional structure.

18. The use according to claim 17, wherein the substrate (101) is comprised by a sheet.

19. The use according to any of claims 1 to 18, wherein the polymer layer (103) fulfills at least one of the following criteria:
a) an IR-absorption of the first area (105) is at least 2 times as high as an IR-absorption of the further area (106);
b) an electrical conductivity of the further area (106) is at least 4 times as high as an electrical conductivity of the first area (105);
c) at least part of the polymer layer surface (104) has a surface resistance in the range from 5 to 10¹⁰ Ohm/square;
d) the polymer layer (103) is optically transparent;
e) the polymer layer (103) has a thickness in the range from 0.01 to 500 µm.

## Patentansprüche

1. Verwendung einer Polymerschicht (103), die einen ersten Bereich (105) und einen weiteren Bereich (106) umfasst, als Sicherheitsmerkmal, das durch Feuchtigkeit visualisiert werden kann, wobei die Polymerschicht (103) in einem Verbundmaterial (100) enthalten ist, umfassend:
a) ein Substrat (101), umfassend eine Substratoberfläche (102);
b) die Polymerschicht (103), umfassend eine Polymerschichtoberfläche (104), wobei die Polymerschicht (103)
i) ein Polymer umfasst,
ii) mindestens teilweise die Substratoberfläche (102) überlagert;
wobei die Polymerschichtoberfläche (104) den ersten Bereich (105) und den weiteren Bereich (106) umfasst;
wobei ein Absolutwert einer Differenz zwischen einem Benetzungswinkel zum Benetzen des ersten Bereichs (105) mit Wasser und einem Benetzungswinkel zum Benetzen des weiteren Bereichs (106) mit Wasser mindestens 10° beträgt; wobei das Polymer ein elektrisch leitendes Polymer ist.

2. Verwendung nach Anspruch 1, wobei das leitende Polymer Komplexe von Poly(3,4-ethylendioxythiophen)-polystyrolsulfonat beinhaltet.

3. Verwendung nach einem der vorhergehenden Ansprüche, wobei die Polymerschicht (103) das Polymer in einer Menge im Bereich von 5 bis 97 Gew.% umfasst, bezogen auf das Gesamtgewicht der Polymerschicht (103).

4. Verwendung nach einem der vorhergehenden Ansprüche, wobei die Polymerschicht (103) ferner ein weiteres Polymer umfasst.

5. Verwendung nach Anspruch 4, wobei die Polymerschicht (103) das weitere Polymer in einer Menge von mindestens 10 Gew.% umfasst, bezogen auf das Gesamtgewicht der Polymerschicht (103);
wobei ein Transmissionskoeffizient des ersten Bereichs (105), der mit Wasser benetzt wird, mindestens 10 % höher als ein Transmissionskoeffizient des ersten Bereichs (105) ist, der trocken ist.

6. Verwendung nach Anspruch 4, wobei die Polymerschicht (103) das weitere Polymer in einer Menge von weniger als 20 Gew.% umfasst, bezogen auf das Gesamtgewicht der Polymerschicht (103).

7. Verwendung nach einem der vorhergehenden Ansprüche, wobei der erste Bereich (105) durch einen Benetzungswinkel für das Benetzen mit Wasser im Bereich von 10 bis 150° gekennzeichnet ist und der weitere Bereich (106) durch einen Benetzungswinkel für das Benetzen mit Wasser im Bereich von 1 bis 140° gekennzeichnet ist.

8. Verwendung nach einem der vorhergehenden Ansprüche, wobei das Verbundmaterial (100) ferner ein optisches Merkmal (201) umfasst, wobei die Polymerschicht (103) das optische Merkmal (201) überlagert, wobei die Polymerschicht (103) für das optische Merkmal (201) optisch transparent ist.

9. Verwendung nach Anspruch 8, wobei das optische Merkmal (201) eines ausgewählt aus der Gruppe bestehend aus einer optisch variablen Vorrichtung, einer Schicht (1001) mit hohem Brechungsindex, einer Farbe, einem grafischen Element, einem Wasserzeichen, einer reflektierenden Beschichtung, einem eingelegten Muster (Originalsprache: an inlay) oder einer Kombination von mindestens zwei davon ist.

10. Verwendung nach Anspruch 9, wobei die optisch variable Vorrichtung eine Beugungsstruktur und gegebenenfalls eine Metallschicht (901) umfasst.

11. Verwendung nach Anspruch 1, wobei das Verbundmaterial (100) umfasst:
a) das Substrat (101);
b) eine Metallschicht (901), umfassend eine Metallschichtoberfläche (902), wobei die Metallschicht (901)
i) ein Metall umfasst,
ii) mindestens teilweise die Substratoberfläche (102) überlagert;
c) eine Beugungsschicht (903), umfassend eine Beugungsschichtoberfläche (904);
wobei die Beugungsschicht (903)
i) eine Beugungsstruktur umfasst,
ii) mindestens teilweise die Metallschichtoberfläche (902) überlagert;
d) die Polymerschicht (103),
wobei die Polymerschicht (103) die Beugungsschichtoberfläche (904) mindestens teilweise überlagert.

12. Verwendung nach Anspruch 1, wobei das Verbundmaterial (100) umfasst:
a) das Substrat (101);
b) eine Schicht (1001) mit hohem Brechungsindex, umfassend eine Oberfläche (1002) einer Schicht mit hohem Brechungsindex;
wobei die Schicht (1001) mit hohem Brechungsindex die Substratoberfläche (102) mindestens teilweise überlagert;
c) eine Beugungsschicht (903), umfassend eine Beugungsschichtoberfläche (904);
wobei die Beugungsschicht (903)
i)eine Beugungsstruktur umfasst,
ii) mindestens teilweise die Oberfläche (1002) der Schicht mit hohem Brechungsindex überlagert;
d) die Polymerschicht (103),
wobei die Polymerschicht (103) die Beugungsschichtoberfläche (904) mindestens teilweise überlagert.

13. Verwendung nach Anspruch 12, wobei das Verbundmaterial (1000) ferner eine Metallschicht (901) umfasst, die eine Metallschichtoberfläche (902) umfasst, wobei die Metallschicht (901)
a) ein Metall umfasst,
b) die Oberfläche (1002) der Schicht mit hohem Brechungsindex teilweise überlagert;
wobei die Metallschichtoberfläche (902) von der Beugungsschicht (903) mindestens teilweise überlagert wird.

14. Verwendung nach einem der Ansprüche 12 bis 13, wobei die Polymerschicht (103) die Polymerschicht (103) gemäß einem der Ansprüche 1 bis 7 ist.

15. Verwendung nach einem der vorhergehenden Ansprüche, wobei das Verbundmaterial (100, 900, 1000) ferner ein haptisches Merkmal (501) umfasst, wobei die Polymerschicht (103) das haptische Merkmal (501) überlagert, wobei die Polymerschicht (103) für das haptische Merkmal (501) haptisch transparent ist.

16. Verwendung nach Anspruch 15, wobei das haptische Merkmal (501) eines ausgewählt aus der Gruppe bestehend aus einem Prägedruck, einem erhabenen Relief, einem abgesenkten Relief, einem Braille-Merkmal, einer Textur, einer Perforation oder einer Kombination von mindestens zwei davon ist.

17. Verwendung nach einem der vorhergehenden Ansprüche, wobei das Substrat (101) durch eine Lage oder eine nicht-lagenartige dreidimensionale Struktur gebildet wird.

18. Verwendung nach Anspruch 17, wobei das Substrat (101) durch eine Lage gebildet wird.

19. Verwendung nach einem der Ansprüche 1 bis 18, wobei die Polymerschicht (103) mindestens eines der folgenden Kriterien erfüllt:
a) eine IR-Absorption des ersten Bereichs (105) ist mindestens 2 Mal so hoch wie eine IR-Absorption des weiteren Bereichs (106);
b) eine elektrische Leitfähigkeit des weiteren Bereichs (106) ist mindestens 4 Mal so hoch wie eine elektrische Leitfähigkeit des ersten Bereichs (105);
c) mindestens ein Teil der Polymerschichtoberfläche (104) weist einen Oberflächenwiderstand im Bereich von 5 bis 10¹⁰ Ohm/Quadrat auf;
d) die Polymerschicht (103) ist optisch transparent;
e) die Polymerschicht (103) hat eine Dicke im Bereich von 0,01 bis 500 µm.

## Revendications

1. Utilisation d'une couche de polymère (103) comprenant une première zone (105) et une autre zone (106) en tant qu'élément caractéristique de sécurité qui peut être visualisé grâce à l'humidité, dans laquelle la couche de polymère (103) est comprise dans un composite (100) comprenant :
a) un substrat (101), comprenant une surface (102) de substrat ;
b) la couche de polymère (103) comprenant une surface (104) de couche de polymère,
la couche de polymère (103)
i) comprenant un polymère,
ii) étant au moins en partie superposée sur la surface (102) du substrat ;
la surface (104) de la couche de polymère comprenant la première zone (105) et l'autre zone (106) ; dans laquelle une valeur absolue d'une différence entre un angle de mouillage pour le mouillage de la première zone (105) avec de l'eau et un angle de mouillage pour le mouillage de l'autre zone (106) avec de l'eau est d'au moins 10° ;
dans laquelle le polymère est un polymère électroconducteur.

2. Utilisation selon la revendication 1, dans laquelle le polymère conducteur comprend des complexes du poly(3,4-éthylènedioxythiophène)-polystyrènesulfonate.

3. Utilisation selon l'une quelconque des revendications précédentes, dans laquelle la couche de polymère (103) comprend le polymère en une quantité dans la plage de 5 à 97 % en poids par rapport au poids total de la couche de polymère (103).

4. Utilisation selon l'une quelconque des revendications précédentes, dans laquelle la couche de polymère (103) comprend en outre un autre polymère.

5. Utilisation selon la revendication 4, dans laquelle la couche de polymère (103) comprend l'autre polymère en une quantité d'au moins 10 % en poids par rapport au poids total de la couche de polymère (103) ; dans laquelle un coefficient de transmission de la première zone (105) qui est mouillée avec de l'eau est au moins 10 % supérieur à un coefficient de transmission de la première zone (105) qui est sèche.

6. Utilisation selon la revendication 4, dans laquelle la couche de polymère (103) comprend l'autre polymère en une quantité inférieure à 20 % en poids par rapport au poids total de la couche de polymère (103).

7. Utilisation selon l'une quelconque des revendications précédentes, dans laquelle la première zone (105) est **caractérisée par** un angle de mouillage pour le mouillage avec de l'eau dans la plage de 10 à 150° et l'autre zone (106) est **caractérisée par** un angle de mouillage pour le mouillage avec de l'eau dans la plage de 1 à 140°.

8. Utilisation selon l'une quelconque des revendications précédentes, dans laquelle le composite (100) comprend en outre un élément caractéristique optique (201),
la couche de polymère (103) étant superposée sur l'élément caractéristique optique (201),
la couche de polymère (103) étant optiquement transparente pour l'élément caractéristique optique (201) .

9. Utilisation selon la revendication 8, dans laquelle l'élément caractéristique optique (201) en est un choisi dans le groupe constitué par un dispositif optiquement variable, une couche d'indice de réfraction élevé (1001), une couleur, un élément graphique, un filigrane, un revêtement réfléchissant, une incrustation (en langue original: an inlay) ou une association d'au moins deux de ceux-ci.

10. Utilisation selon la revendication 9, dans laquelle le dispositif optiquement variable comprend une structure diffractive et éventuellement une couche métallique (901).

11. Utilisation selon la revendication 1, dans laquelle le composite (100) comprend :
a) le substrat (101) ;
b) une couche métallique (901), comprenant une surface (902) de couche métallique ;
la couche métallique (901)
i) comprenant un métal,
ii) étant au moins en partie superposant la surface (102) du substrat ;
c) une couche diffractive (903), comprenant une surface (904) de couche diffractive ;
la couche diffractive (903)
i) comprenant une structure diffractive,
ii) étant au moins en partie superposant la surface (902) de la couche métallique ;
d) la couche de polymère (103),
la couche de polymère (103) étant au moins en partie superposant la surface (904) de la couche diffractive.

12. Utilisation selon la revendication 1, dans laquelle le composite (100) comprend :
a) le substrat (101) ;
b) une couche d'indice de réfraction élevé (1001), comprenant une surface (1002) de couche d'indice de réfraction élevé ;
la couche d'indice de réfraction élevé (1001) étant au moins en partie superposant la surface (102) du substrat ;
c) une couche diffractive (903), comprenant une surface (904) de couche diffractive ;
la couche diffractive (903)
i) comprenant une structure diffractive,
ii) étant au moins en partie superposant la surface (1002) de la couche d'indice de réfraction élevé ;
d) la couche de polymère (103),
la couche de polymère (103) étant au moins en partie superposant la surface (904) de la couche diffractive.

13. Utilisation selon la revendication 12, dans laquelle le composite (1000) comprend en outre une couche métallique (901), comprenant une surface (902) de couche métallique ;
la couche métallique (901)
a) comprenant un métal,
b) étant au moins en partie superposant la surface (1002) de la couche d'indice de réfraction élevé ;
sur laquelle surface (902) de couche métallique la couche diffractive (903) est au moins en partie superposée.

14. Utilisation selon l'une quelconque des revendications 12 à 13, dans laquelle la couche de polymère (103) est la couche de polymère (103) de l'une quelconque des revendications 1 à 7.

15. Utilisation selon l'une quelconque des revendications précédentes, dans laquelle le composite (100, 900, 1000) comprend en outre un élément caractéristique haptique (501),
la couche de polymère (103) étant superposant l'élément caractéristique haptique (501),
la couche de polymère (103) étant haptiquement transparente pour l'élément caractéristique haptique (501).

16. Utilisation selon la revendication 15, dans laquelle l'élément haptique (501) en est un choisi dans le groupe constitué par une impression en relief, un lustré en relief, un relief enfoncé, une impression en braille, une texture, une perforation ou une association d'au moins deux de ceux-ci.

17. Utilisation selon l'une quelconque des revendications précédentes, dans laquelle le substrat (101) est constitué d'une feuille ou d'une structure tridimensionnelle ne ressemblant pas à une feuille.

18. Utilisation selon la revendication 17, dans laquelle le substrat (101) est constitué d'une feuille.

19. Utilisation selon l'une quelconque des revendications 1 à 18, dans laquelle la couche de polymère (103) satisfait à au moins l'un des critères suivants :
a) une absorption IR de la première zone (105) est au moins 2 fois plus élevée qu'une absorption IR de l'autre zone (106) ;
b) une conductivité électrique de l'autre zone (106) est au moins 4 fois plus élevée qu'une conductivité électrique de la première zone (105) ;
c) au moins une partie de la surface (104) de la couche de polymère a une résistance superficielle dans la plage de 5 à 10¹⁰ Ohm/carré ;
d) la couche de polymère (103) est optiquement transparente ;
e) la couche de polymère (103) a une épaisseur dans la plage de 0,01 à 500 µm.
